Europäisches Patentamt

European Patent Office

Office européen des brevets

(11) Numéro de publication: **0 129 467**
**A1**

## (12) DEMANDE DE BREVET EUROPEEN

(21) Numéro de dépôt: 84401182.5

(22) Date de dépôt: 07.06.84

(51) Int. Cl.³: **A 01 B 33/02**
**A 01 B 33/14, A 01 C 3/06**

(30) Priorité: 08.06.83 FR 8309480

(43) Date de publication de la demande:
27.12.84 Bulletin 84/52

(84) Etats contractants désignés:
AT BE CH DE FR GB IT LI LU NL SE

(71) Demandeur: KONGSKILDE KONCERNSELSKAB A/S
No. 64 Skaelskorvej Lynge-Eskildstrup
DK-4180 Soro(DK)

(72) Inventeur: Boudin, Jean-Pierre
11, rue de Champdoux
F-45560 Saint-Denis en Val(FR)

(74) Mandataire: Casanova, André et al,
CABINET ARMENGAUD JEUNE CASANOVA et
LEPEUDRY 23 boulevard de Strasbourg
F-75010 Paris(FR)

(54) Instrument aratoire rotatif à axe horizontal.

(57) Chaque flasque (2) fait un angle α avec la perpendiculaire à l'arbre horizontal (1), est elliptique ou inscriptible dans une ellipse et se projette selon un cercle quand on regarde en bout cet arbre horizontal (1); ces flasques (2) sont décalés angulairement les uns par rapport aux autres de façon à donner un mouvement hélicoïdal homogène et régulier à l'ensemble; l'une au moins des dents (3) est décalée par rapport à un axe de l'ellipse d'un angle ß) les dents étant équidistantes les unes des autres.

FIG.1

EP 0 129 467 A1

Croydon Printing Company Ltd.

0129467

1.

La présente invention concerne un instrument
agricole rotatif à axe horizontal et mû par une source d'énergie. Il peut être notamment utilisé pour travailler le sol.

Parmi les instruments agricoles rotatifs à axe
horizontal pour travailler le sol et entraînés par la prise
de force du tracteur, on distingue généralement deux catégories : les fraises qui comportent le plus souvent des dents
droites, étroites, situées dans des plans perpendiculaires à
la rotation, et tournant à des vitesses relativement élevées ;
et les cultivateurs rotatifs qui sont munis de lames larges,
situées à l'origine dans des plans perpendiculaires à l'axe
horizontal, puis diversement incurvés à leur extrémité et
qui tournent à des vitesses plus lentes que celles des
fraises. Les axes rotatifs de ces instruments tournent tous
dans le sens de rotation des roues du tracteur.

De tels instruments font subir au sol quatre traitements élémentaires successifs : cisaillement, arrachement
de mottes, projection vers l'arrière des mottes découpées et
arrachées, et pluie de terre fine grâce à un capot contre
lequel se brisent les mottes. Ils sont en particulier employés pour reprendre après l'hiver un labour afin de préparer
le lit de semences.

Sur de tels instruments pour travailler le sol,
les dents et lames sont situées dans des plans perpendiculaires à l'axe horizontal : en conséquence, elles décrivent
la même génératrice dans le sens d'avancement de l'instrument.
De ce fait une partie du sol ne peut être travaillée lors
d'un premier passage de l'instrument : il est donc nécessaire
de repasser au moins partiellement sur chaque bande de
travail, ce qui implique un grand nombre de passages sur une
parcelle par rapport à la largeur de l'instrument agricole.

Aussi un des buts de la présente invention est-il
de fournir un instrument agricole qui comporte des organes
actifs tels que des dents ou des couteaux montés sur un même
flasque, situés sur des génératrices différentes.

Un autre but de l'invention est un instrument de ce type permettant d'obtenir une couverture homogène de la matière travaillée par les organes actifs.

Un but supplémentaire de l'invention est un tel instrument dont les organes actifs effectuent chacun, à un moment donné, un travail différent.

Un objet de la présente invention est un instrument agricole rotatif à axe horizontal dont la rotation vue en bout correspond à un mouvement circulaire, régulier et homogène.

Ces buts et cet objet ainsi que d'autres qui apparaîtront par la suite, sont atteints par un instrument agricole rotatif à axe horizontal et mû par une source d'énergie, constitué d'un châssis sur lequel est notamment monté un arbre horizontal comprenant des flasques munis de dents, faisant chacun un angle $\alpha$ avec la perpendiculaire à l'arbre horizontal, et étant décalés angulairement les uns par rapport aux autres. Selon la présente invention, ces flasques sont elliptiques ou inscriptibles dans une ellipse et se projettent selon un cercle quand on regarde en bout l'arbre horizontal et l'une au moins des dents est décalée par rapport à un axe de l'ellipse d'un angle $\beta$, ces dents étant équidistantes les unes des autres.

Avantageusement, cet instrument agricole comporte au moins une paire de roues et est entraîné par la prise de force d'un tracteur. Il peut être monté à l'arrière d'une remorque.

De préférence, les flasques comportent des fourreaux dans lesquels sont maintenues les dents. Ces dents sont maintenues à l'intérieur des fourreaux par des goupilles.

Avantageusement, le nombre de ces dents est compris entre deux et six.

Selon un mode de réalisation préféré de la présente invention, ces dents ont une section polygonale terminée par une palette, l'orientation de chaque palette pouvant être différente.

Avantageusement les extrémités libres des dents sont inscriptibles dans une ellipse qui se projette selon un cercle quand on regarde en bout l'arbre horizontal.

La description qui va suivre et qui ne présente aucun caractère limitatif, doit être lue en regard des figures annexées parmi lesquelles :

- la figure 1 représente, vue en perspective, une partie de l'arbre horizontal d'un instrument selon la présente invention ;

- la figure 2 est une coupe selon la ligne II-II de la figure 1 ;

- la figure 3 représente un flasque vu en plan et

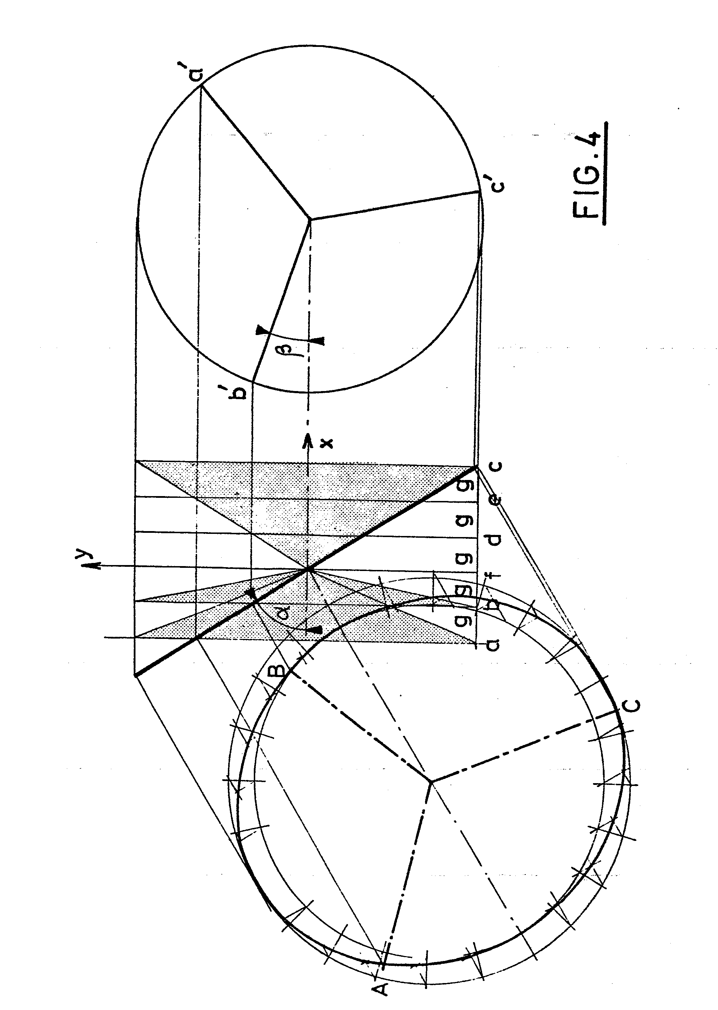

- la figure 4 représente schématiquement la détermination de la position des dents sur un flasque.

Un instrument agricole rotatif à axe horizontal comprend généralement un châssis sur lequel est monté un axe horizontal relié par des moyens connus en eux-mêmes à une source d'énergie telle que la prise de force d'un tracteur. Ce châssis peut être monté sur roues ou porté à l'arrière d'un tracteur.

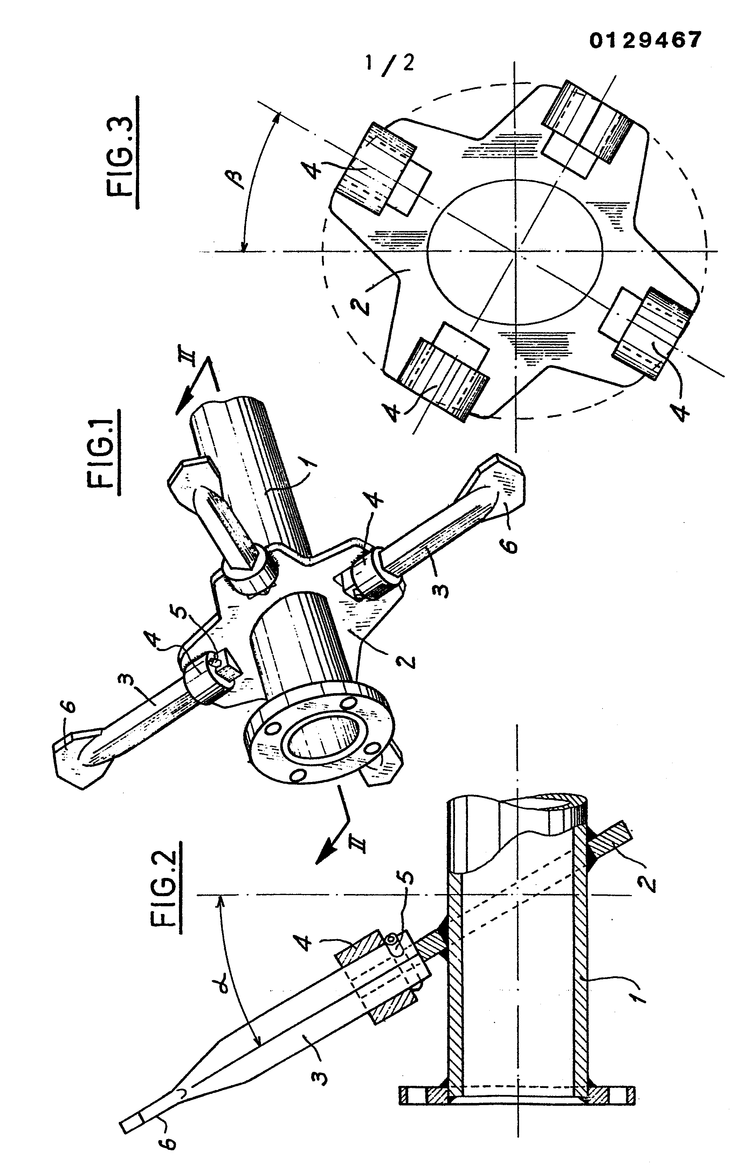

Ainsi qu'on peut le voir sur la figure 1, cet arbre horizontal 1 comprend plusieurs flasques 2, un seul étant représenté sur cette figure, qui sont inclinés par rapport à l'arbre horizontal 1 d'un angle $\alpha$.

Chaque flasque 2 est de forme elliptique ou est inscriptible dans une ellipse comme représenté sur la figure 3. Les dimensions de cette ellipse sont telles qu'elle se projette selon un cercle lorsque l'on regarde en bout l'arbre horizontal 1. C'est-à-dire que si la longueur du petit axe de l'ellipse est $\underline{a}$, celle du grand axe est dans ce cas égale à $a/\sin \alpha$.

Chaque flasque 2 comporte un nombre de dents 3 qui est le plus souvent deux, trois ou quatre, voire cinq ou six. Ces dents 3, selon un mode de réalisation avantageux, sont montées amovibles sur le flasque 2. Elles sont disposées sur chaque flasque, de telle sorte qu'elles soient équidistantes les unes des autres sur le cercle selon lequel le flasque se projette.

Les dents 3, toutes identiques pour un même instrument, sont maintenues en position sur le flasque 2, par exemple, par un fourreau 4 solidaire de ce flasque et par une goupille 5 disposée dans la dent en arrière du fourreau 4.

On peut échancrer le flasque 2 entre chaque dent 3 comme représenté sur la figure 3 : ceci, d'une part, a pour but d'économiser de la matière et, d'autre part, d'éviter éventuellement des problèmes de bourrage. A la limite, le flasque 2 peut être constitué de nervures supportant les fourreaux 4.

Ces dents 3 peuvent être de section circulaire ou polygonale, par exemple triangulaire ou quadrangulaire, et terminées éventuellement par une palette 6. Par palette, il faut entendre une forme plate dont les bords symétriques sont tranchants, de façon notamment à diminuer l'énergie nécessaire au fonctionnement d'un tel instrument agricole. Toutes les palettes des dents montées sur un même flasque peuvent être toutes orientées de la même façon ou non en fonction du travail souhaité.

Chaque dent 3 dont l'axe passe par le centre de l'arbre horizontal 1, travaille sur une génératrice unique en décrivant une épicycloïde lors de la combinaison des mouvements de rotation de l'arbre horizontal et d'avancement de l'instrument.

Tous les flasques d'un même instrument font, ainsi qu'il l'a été précédemment indiqué, le même angle avec la perpendiculaire à l'axe horizontal 1, mais leurs grands axes sont tous décalés les uns par rapport aux autres conférant à l'ensemble un mouvement hélicoïdal.

En conséquence, chaque dent est disposée de telle façon que les passages décrits par leur extrêmité lors de leur rotation sont équidistants et forment entre eux une dentelure assimilable à un pas de vis (cette dentelure correspond à une rotation de l'arbre horizontal en position statique).

5

Lors de l'avancement de l'instrument si celui-ci est destiné au travail du sol, le balancement des dents à droite ou à gauche suivant leur position va créer des zones d'alternance évitant tout phénomène de lissage, de passages réguliers et répétitifs susceptibles de provoquer une semelle de labour.

La relation entre l'angle β et le décalage angulaire des flasques entre eux sur l'arbre horizontal est fonction du brassage régulier et du recoupement des dents pour obtenir un travail homogène. Le résultat final est, bien entendu, également dépendant de la vitesse d'avancement de l'instrument, de la vitesse de rotation de l'arbre horizontal et des éventuels organes auxiliaires destinés à parfaire le travail.

A titre d'exemple non limitatif, les caractéristiques suivantes doivent être prises en considération pour réaliser un instrument conforme à la présente invention :

- angle α
- angle β
- décalage angulaire entre deux flasques successifs
- nombre de dents par flasque
- diamètre de l'arbre horizontal
- longueur du petit axe de chaque flasque

Un instrument agricole rotatif à axe horizontal et mû par une source d'énergie selon la présente invention peut notamment être utilisé pour travailler le sol, mais peut aussi être monté à l'arrière d'une remorque pour épandre du fumier.

Afin de mieux faire comprendre l'invention, un instrument agricole de ce type dont chaque flasque comporte trois dents sera pris comme exemple .

Chaque flasque comporte trois dents A, B, C dont la disposition doit être équidistante sur le cercle selon lequel chaque flasque se projette : en conséquence, l'angle formé par ces dents entre elles est donc de 120°.

L'intervalle de travail d'un flasque comprend six génératrices : en d'autres termes, on rencontre six traces de dents sous un flasque. Ces six génératrices sont équidistantes : les génératrices a, b et c sont décrites par les dents du flasque considéré ; les génératrices d et c sont décrites par des dents du flasque situé à la droite du précédent lorsque l'on regarde l'instrument ; et la génératrice f est décrite par une dent du flasque situé à la gauche du flasque considéré lorsque l'on regarde l'instrument de l'arrière. De la gauche vers la droite, l'ordre de ces génératrices est : a, b, f, d, e, c.

Afin de calculer l'angle $\alpha$, on considérera le cas où les trois dents A, B, C du flasque se projettent selon un segment de droite sur un plan horizontal. L'extrémité de chaque dent se trouve alors au point de rencontre de ce segment avec sa génératrice correspondante située dans ce même plan horizontal.

Cette disposition particulière trouve son équivalence dans la vue en bout : il existe un angle $\beta$ entre une dent (en général on choisit la plus proche de l'axe horizontal du rotor) par rapport à l'axe horizontal du rotor.

Cet angle $\alpha$ est fonction de l'écartement (g) des génératrices et du rayon du rotor R.

Les différentes données sont donc :

- R : rayon du rotor
- l : longueur projetée de la dent A par rapport à l'axe du rotor
- m : longueur projetée de la dent B par rapport à l'axe du rotor

- n : longueur projetée de la dent C par rapport à l'axe du rotor
- α : angle du flasque par rapport à l'axe du rotor
- β : angle que forme la dent B par rapport à l'axe du rotor (vu en bout)
- g : écartement entre chaque génératrice.

On en déduit le système d'équations suivantes :

(1)   $l \sin \alpha = R \sin ( \frac{\pi}{3} - \beta )$

(2)   $m \sin \alpha = R \sin \beta$

(3)   $n \sin \alpha = R \sin ( \frac{\pi}{3} + \beta )$

(4)   $l \cos \alpha - m \cos \alpha = g$

(5)   $l \cos \alpha + n \cos \alpha = 5g$

(6)   $m \cos \alpha + n \cos \alpha = 4g$

La résolution de ce système permet de déterminer l'ange β puisque : $tg \, \beta = \frac{\sqrt{3}}{5}$ ce qui correspond à une valeur d'angle de 19°06'24".

Par ailleurs $tg \, \alpha = \dfrac{R \left[ \sin ( \frac{\pi}{3} - \beta ) - \sin \beta \right]}{g}$

d'où $tg \, \alpha = \frac{R}{d} (0,327322)$.

On peut donc ainsi déterminer l'angle α en fonction des données R et g que l'on s'impose.

Le segment de droite a pour équation $y = x \, tg\alpha$ ; comme $y = m \sin \alpha$, ceci implique que $x = m \cos \alpha$. Or $m \cos \alpha$ est égal à l'écartement g des génératrices : l'axe du rotor se situe donc sur la génératrice f.

La projection en vraie grandeur du flasque ainsi définie permet donc de déterminer exactement la position des dents les unes par rapport aux autres et par rapport aux axes du flasque elliptique.

L'écartement entre chaque flasque sur le rotor est déterminé par la formule $z = p$ dans laquelle :

  z　représente l'écartement entre chaque flasque

  p　nombre de dents par flasque

  g　écartement entre chaque génératrice.

REVENDICATIONS

1.- Instrument agricole à axe horizontal et mû par une source d'énergie, constitué d'un châssis sur lequel est notamment monté un arbre horizontal comprenant des flasques munis de dents, faisant chacun un angle α avec la perpendiculaire à l'arbre horizontal, et étant décalés angulairement les uns par rapport aux autres, caractérisé en ce que lesdits flasques (2) sont elliptiques ou inscriptibles dans une ellipse et se projettent selon un cercle quand on regarde en bout ledit arbre horizontal (1) et que l'une au moins desdites dents (3) est décalée par rapport à un axe de l'ellipse d'un angle β, lesdites dents étant équidistantes les unes des autres.

2.- Instrument agricole selon la revendication 1, caractérisé en ce qu'il comporte au moins une paire de roues et qu'il est entraîné par la prise de force d'un tracteur.

3.- Instrument agricole selon la revendication 1, caractérisé en ce qu'il est monté à l'arrière d'une remorque.

4.- Instrument agricole selon les revendications 1 à 3, caractérisé en ce que lesdits flasques (2) comportent des fourreaux (4) dans lesquels sont maintenues lesdites dents (3).

5.- Instrument agricole selon la revendication 4, caractérisé en ce que lesdites dents (3) sont maintenues à l'intérieur des fourreaux (4) par des goupilles (5).

6.- Instrument agricole selon les revendications 1 à 5, caractérisé en ce que le nombre des dents (3) est compris entre deux et six.

7.- Instrument agricole selon les revendications 1 à 6, caractérisé en ce que lesdites dents (3) ont une section polygonale terminée par une palette (6), l'orientation de chaque palette pouvant être différente.

8.- Instrument agricole selon l'une quelconque des revendications 1 à 7, caractérisé en ce que les extrémités libres des dents (3) sont inscriptibles dans une ellipse qui se projette selon un cercle quand on regarde en bout ledit arbre horizontal (1).

FIG.3

FIG.1

FIG.2

FIG.4

0129467

**0129467**

Office européen
des brevets

**RAPPORT DE RECHERCHE EUROPEENNE**

Numéro de la demande

EP  84 40 1182

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 574 457  (MASCHINENFABRIK SCHMOTZER)<br>* Page 5, ligne 12 - page 6, ligne 44; figures 4-7 * | 1,2,4, 6-8 | A 01 B  33/02<br>A 01 B  33/14<br>A 01 C   3/06 |
| A | FR-A-2 059 777  (LEBEGUE)<br>* En entier * | 1,2,8 | |
| A | FR-A-1 155 173  (RINK)<br>* Page 3, colonne de gauche, paragraphes 5-7; figures 1-4,6 * | 3,8 | |
| A | GB-A-2 079 121  (KUHN)<br>* Page 2, lignes 46-69; figure 2 * | 7 | |
| A | CH-A- 231 441  (SIGRIST)<br>* Page 2, lignes 76-88; figures 3,5,6,7 * | 4,5,7 | **DOMAINES TECHNIQUES RECHERCHES (Int. Cl. ³)** |
| A | FR-A-1 015 326  (CHARRIER)<br>* Page 2, colonne de gauche, paragraphe 1; figures 1,5 * | 5 | A 01 B<br>A 01 C |
| | ----- | | |

Le présent rapport de recherche a été établi pour toutes les revendications

| Lieu de la recherche | Date d'achèvement de la recherche | Examinateur |
|---|---|---|
| LA HAYE | 01-08-1984 | VERDOODT S.J.M. |